# EUROPEAN PATENT SPECIFICATION

(11) **EP 2 326 070 B1**
(45) Date of publication and mention of the grant of the patent: **14.11.2018**
(21) Application number: 09812640.2
(22) Date of filing: 28.08.2009
(51) Int. Cl.: H04M 3/42, H04W 92/04

(54) **SYSTEM AND METHOD FOR IMPLEMENTING IP-ENABLED COLOR RING**
SYSTEM UND VERFAHREN ZUR IMPLEMENTIERUNG EINES IP-AKTIVIERTEN COLOR-RING-DIENSTES
SYSTÈME ET PROCÉDÉ DE MISE EN OEUVRE D'UNE SONNERIE PERSONNALISÉE PAR IP

(30) Priority: 11.09.2008 CN 200810211845
(43) Date of publication of application: 25.05.2011
(73) Proprietor: ZTE Corporation, Shenzhen, Guangdong 518057 (CN)
(72) Inventor: YOU, Meiguang, Shenzhen Guangdong 518057 (CN); QIN, Yantao, Shenzhen Guangdong 518057 (CN); ZHENG, Zhiqiang, Shenzhen Guangdong 518057 (CN)
(74) Representative: Novagraaf Technologies
(86) International application number: PCT/CN2009/073611
(87) International publication number: WO 2010/028574

(56) References cited:
- EP-A1- 1 786 162
- WO-A1-2007/045527
- WO-A1-2007/104241
- CN-A- 101 355 608
- US-A1- 2005 025 130
- "Interworking between Session Initiation Protocol (SIP) and Bearer Independent Call Control protocol or ISDN User Part; Q.1912.5 (03/04)", ITU-T STANDARD IN FORCE (I), INTERNATIONAL TELECOMMUNICATION UNION, GENEVA, CH, no. Q.1912.5 (03/04), 12 March 2004 (2004-03-12), XP017402646,
- 'Specifications of signalling related to Bearer Independent Call Control (BICC) Interworking between Session Initiation Protocol (SIP) and Bearer Independent Call Control Protocol or ISDN User Part' ITU-TQ.1912.5 SERIES Q: SWITCHING AND SIGNALLING March 2004, XP008144195

## Description

### Field of the Invention

The present invention relates to a technology for implementing an IP-enabled color ring, and especially to a method for implementing the IP-enabled color ring based on a BICC (Bearer Independent Call Control) protocol.

### Background of the Invention

An R4 network, as a transitional solution for the evolution from 2G to 3G, has been widely used. The switching equipment in the R4 network realizes the separation of control from bearer, for example, the BICC protocol is used between mobile switching center servers to realize the separation of control from bearer. However, with the development of network technologies, the R4 network will surely be substituted by the R5/R6 network in the future, then the media servers are used by color ring equipment providers must be realized based on the control protocol of the R5/R6 network, for example, the control protocol in the R5 network is the SIP (Session Initiation Protocol). In addition, for the IP-enabled color ring technologies, current color rings are still the implementing solution of 2G, but implementing IP-enabled color rings is imperative with the construction and the maturation of the R4 network and the R5/R6 network.

Obviously, with the construction and the maturation of the R4 network and the R5/R6 network, the compatibility of the R5/R6 network with the R4 network should be taken into consideration when implementing the IP-enabled color ring under the situation that the R4 network and the R5/R6 network coexist. Thus, a new demand is to realize interconnection between the media server based on the R5/R6 network and the core network of the R4 network and thus to merge the R4 network with the R5/R6 network so as to realize the IP-enabled color ring. For this new demand, there is no effective solution currently.

EP 1 786 162 A1 describes a method allowing the calling terminal to listen to the signal tone of the called user terminal when inter-networking.

WO 2007/045527 A1 describes a method involves establishing call connection between first participant in a telephone network and second participant in an IP-based network with reference to the BICC and SIP signalling protocols used in the telephone and IP-based networks. The call messages in the first signalling protocol are converted into call message in the second signalling protocol using specified codes.

### Summary of the Invention

The embodiments and/or examples of the following detailed description, which do not fall under the scope of protection of the appended set of claims are considered as not being part of the present invention.

Whereas, In order to overcome the above problems, the present invention provides a system for implementing IP-enabled color ring, which is capable of realizing interconncetion between the media server based on the R5/R6 network and the core network of the R4 network, thereby merging the R4 network with the R5/R6 network to realize the IP-enabled color ring.

In order to overcome the above problems, the present invention provides a method for implementing the IP-enabled color ring, which is capable of realizing interconnection between the media server based on the R5/R6 network and the core network of the R4 network, thereby merging the R4 network with the R5/R6 network to realize the IP-enabled color ring.

In the present invention, the BICC signaling is used to access the R4 network and then communicate with the R4 network; the SIP signaling is used to communicate with the R5/R6 network; and conversion between the BICC signaling and the SIP signaling within the service platform is realized.

Via the present invention, the problem is solved that in the R4 network architecture, the R5/R6 network equipments are used to implement color ring services, that is, interconnection can be realized between the media server based on the R5/R6 network and the core network of the R4 network and thus to merge the R4 network with the R5/R6 network so as to realize the IP-enabled color ring. The network equipments with the BICC interface or the SIP interface may be connected with each other directly for using by adopting the present invention.

### Brief Description of the Accompanying Drawings

Figure 1 is a schematic view of the structural constitution of the system according to the embodiment of the present invention;
Figure 2 is a schematic view of the structural constitution of the networking manner of a prior system; and
Figure 3 is a schematic view of the flow of the implementation of the method according to the embodiment of the present invention.

### Description of the preferred embodiments

The core concept of the present embodiment is to use the BICC signaling to access the R4 network and then communicate with the R4 network; to use the SIP signaling to communicate with the R5/R6 network; and to realize the conversion between the BICC signaling and the SIP signaling within the service platform. By using the present embodiment, the R5/R6 network equipments can be used to realize the color ring services under the R4 network architecture.

The implementation of the technical solution will be further detailed hereinafter in conjunction with the drawings.

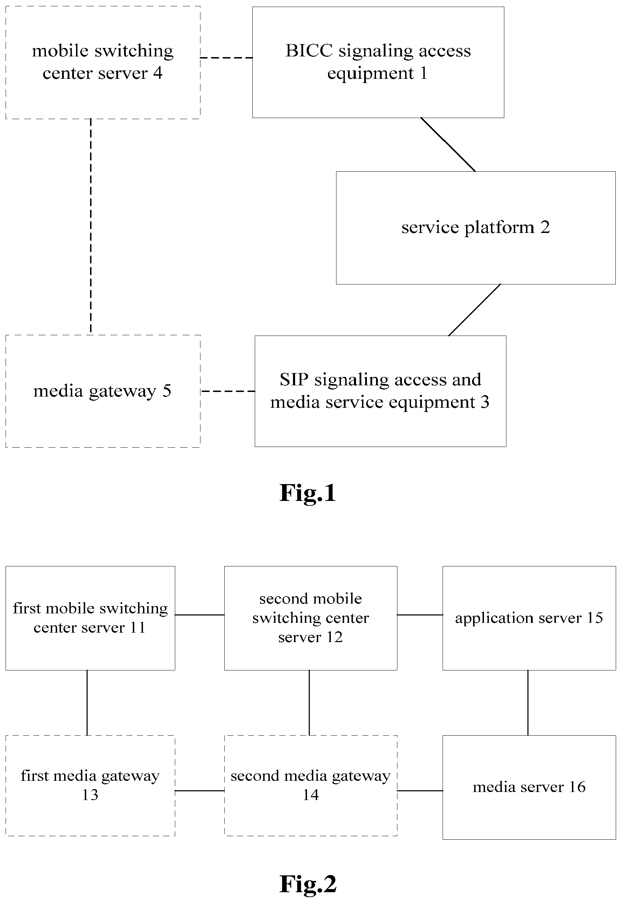

As shown in Figure 1, a system for realizing IP-enabled color ring is shown. This system comprises a BICC signaling access equipment 1, a service platform 2 and an SIP signaling access and media service equipment 3, wherein the BICC signaling access equipment 1 is configured to receive and parse a BICC signaling, and encapsulate the same in an internal message mode, that is, the BICC signaling is sent to the service platform 2 after being converted into a corresponding internal message. The service platform 2 is configured to parse the internal message acquired from the BICC signaling access equipment, and encapsulate the same into an SIP signaling according to the requirement of an SIP protocol and then send it to the SIP signaling access and media service equipment 3; and the service platform 2 is also configured to receive and parse a response of the SIP signaling acquired from the SIP signaling access and media service equipment 3, and encapsulate the same in the internal message mode, i.e., the SIP signaling is sent to the BICC signaling access equipment 1 after being converted into a corresponding internal message. The SIP signaling access and media service equipment 3 is configured to receive the SIP signaling and return the response of the SIP signaling to the service platform. Herein the response of the SIP signaling is also an SIP signaling. In summary, the BICC signaling access equipment 1 and the SIP signaling access and media service equipment 3 can complete the interconnection between the BICC signaling access equipment 1 which accesses the R4 network and the SIP signaling access and media service equipment 3 which accesses the R5/R6 network, by means of the conversion of the internal message of the service platform 2 and encapsulating into the message the specific data obtained after parsing the BICC signaling or the SIP signaling based on different protocols and then forwarding the same.
Wherein the internal message mode is that the specific data obtained by parsing the SIP signaling or the BICC signaling based on different protocols is
encapsulated into a message, rather than encapsulating the specific data into a message corresponding to a protocol according to the requirement of the protocol.

Wherein the BICC signaling access equipment 1 is a BICC front end device, and the SIP signaling access and media service equipment 3 is a media server. Also, as shown in Figure 1, the BICC signaling access equipment 1 is connected with a mobile switching center server 4, the SIP signaling access and media service equipment 3 is connected with a media gateway 5, and the media gateway 5 is connected with the mobile switching center server 4.

Particularly, the interface protocol between the mobile switching center server and the BICC front end device is BICC, an internal interface is between the BICC front end device and the service platform for delivering the internal message, the interface protocol between the service platform and the media server is SIP, and the interface protocol between the media server and the media gateway is IuUP/RTP. The IuUP protocol is an application protocol of a radio network layer user plane of an Iu interface; and the RTP protocol is a real-time transport protocol for providing a terminal-to-terminal transport service. Herein, the mobile switching center server, the BICC front end device, the service platform and the media server, and the internal interfaces or interface protocols between any two of them constitute a control plane, this control plan is used to control the flow of realizing the overall IP-enabled color ring, send a control signaling and separate the interaction between the control and a multimedia. The media server and the media gateway, and the interface protocol between them constitute a media plane, and this media plan is used to realize the interaction of multimedia data between the equipments. Herein the interface between the mobile switching center server and the BICC front end device is an Nc interface. When an IP bearer is used, the interface protocol stacks of the Nc interface are BICC/M3UA/SCTP/IP from upward to downward, wherein the Nc interface is usually an interface between two different mobile switching center servers, and is a control plane portion of a circuit domain of the core network; the M3UA protocol is an MTP level 3 user adaptation layer protocol, which provides conversion of an IP address and a signaling point code; the SCTP protocol is an application protocol of an IP layer, and is a stream control transport protocol which simultaneously transports multiple data streams between two ends of the network connection. The interface between the media server and the media gateway also uses the IP bearer, and the interface protocol stacks are IuUP/RTP/UDP/IP from upward to downward. The UDP protocol is a connection-free transport layer protocol, and is a user data protocol providing a simple unreliable information transport service facing an affair, and the UDP protocol is an interface protocol of the IP protocol and an upper layer protocol. Wherein for the IuUP protocol, the IuUP protocol is a user layer protocol which is used to support the R4 network to be encapsulated on the RTP layer. The media server in the BICC IP-enabled color ring system that supports the R5/R6 network needs to support the IuUP protocol so as to realize the interconnection with the R4 network. Since the media server supports the IuUP protocol, the media server may directly perform the interconnection with the media gateway, thereby one media gateway is saved, and the BICC front end device just needs to support the BICC signaling without supporting an H.248 signaling.
To sum up, in other words, the networking manner using the system of the present embodiment comprises: a mobile switching center server, a BICC front end device, a service platform, a media server and a media gateway. Also, the interface protocol between the mobile switching center server and the BICC front end device connected therewith is the BICC, an internal interface is between the BICC front end device and the service platform connected therewith, the interface protocol between the service platform and the media server connected therewith is the SIP and when an IP bearer is used, the interface protocol stacks between the media server and the media gateway connected therewith are IuUP/RTP/UDP/IP from upward to downward. However, as shown in Figure 2, the networking manner using the prior system generally comprises: a first mobile switching center server 11, a second mobile switching center server 12, an application server 15, a media server 16, a second media gateway 14 and a first media gateway 13. Moreover, the interface protocol between the first mobile switching center server 11 and the second mobile switching center server 12 connected therewith is the BICC, and the second mobile switching center server 12 concurrently has the function of the BICC front end device. The interface protocol stacks between the first media gateway 13 and the second media gateway 14 are IuUP/RTP/UDP/IP from upward to downward, the interface protocol stacks between the second media gateway 14 and the media server 16 are RTP/UDP/IP, and the interface protocol between the first mobile switching center server 11 and the first media gateway 13 and the interface protocol between the second mobile switching center server 12 and the second media gateway 14 are the H.248. The media server 16 is connected with the second mobile switching center server 12 via the application server 15, thereby the interconnection between the R5/R6 network and the R4 network is realized. Herein, it can be seen by comparing the networking manner of the system of the present embodiment with the networking manner of the prior system that: the media server in the networking manner of the system of the present embodiment supports the IuUP protocol so that direct interconnection between the media server and the media
gateway is realized, because the media server supporting the R5/R6 network needs to support the IuUP protocol so as to realize the interconnection with the R4 network. While the media server in the networking manner of the prior system does not support the IuUP protocol, therefore it needs to use the second media gateway 14. Compared with the networking manner of the prior system, in the networking manner of the system of the present embodiment, one media gateway is saved which reduces the cost of the system and the efficiency is improved.

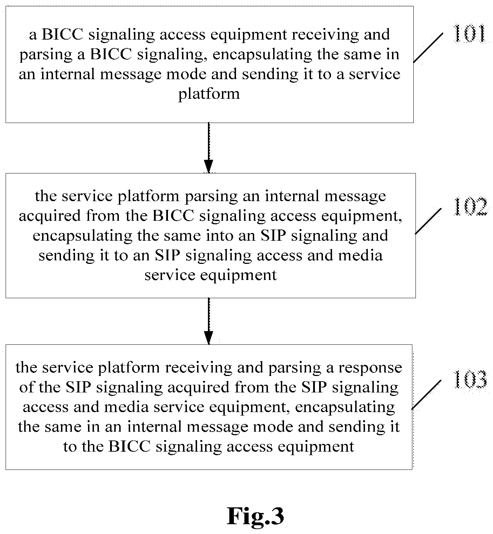

As in Figure 3, a method for implementing the IP-enabled color ring is shown, with this method comprising the following steps:
Step 101, a BICC signaling access equipment receiving and parsing a BICC signaling, encapsulating the same in an internal message mode and then sending it to a service platform;
Step 102, the service platform parsing an internal message acquired from the BICC signaling access equipment, encapsulating the same into an SIP signaling and then sending it to an SIP signaling access and media service equipment;
Step 103, the service platform receiving and parsing a response of the SIP signaling acquired from the SIP signaling access and media service equipment, encapsulating the same in an internal message mode and then sending it to the BICC signaling access equipment.

Herein the BICC signaling access equipment is a BICC front end device, and the BICC signaling is an Initial Address Message (IAM), and the particular processing of step 101 is as follows:
Step 1011, the BICC front end device receiving and parsing the IAM from a mobile switching center server, wherein if the bearer control parameters of the IAM parsed contain session description protocol SDP information of a media gateway, the data parsed from the IAM is directly encapsulated, and the IAM is converted into an initial address notification message (ADDRESSEVENTNOTIFY) and sent to the service platform, otherwise, step 1012 is executed;
Step 1012, the BICC front end device returning an application transport message (APM) to the mobile switching center server and requesting SDP information, wherein when the mobile switching center server responds to the APM and returns an APM encapsulated with the SDP information, the BICC front end
   device encapsulates the data parsed from the IAM and converts the IAM into the ADDRESSEVENTNOTIFY and sends it to the service platform.

Herein the SIP signaling access and media service equipment is a media server, and the particular processing of step 102 is as follows: the service platform parsing the ADDRESSEVENTNOTIFY acquired from the BICC front end device, encapsulating the same into an invitation message (INVITE) and then sending it to the media server.

The particular processing of step 103 is as follows: the service platform receiving and parsing a continuation message CONTINUE acquired from the media server and encapsulated with the SDP information of the media server side, encapsulating the data parsed from the CONTINUE, converting the CONTINUE into a CONTINUE of a type of 180 and carrying the SDP information of the media server side, and sending it to the BICC front end device.

Subsequent to step 103, the following are further included:
Step 104, the BICC front end device parsing the CONTINUE of the type of 180 and carrying the SDP information of the media server side, filling the parsed SDP information of the media server side into the bearer control parameters of the APM, and sending the APM to the mobile switching center server so as to notify the mobile switching center server of the SDP information of the media server of the opposing party; then the BICC front end device returning a continuation response message CONTINUEACK to the service platform to complete a negotiation of multimedia;
Step 105, the BICC front end device parsing a continuity message (COT) when receiving the COT from the mobile switching center server, encapsulating the data parsed from the COT, and converting the COT into an information message INFO and sending it to the service platform; the BICC front end device sending an address complete message (ACM) to the mobile switching center server after receiving an information response message INFORESULT from the service platform; sending an ACM to the mobile switching center server after a timer preset by the BICC front end device has expired when the BICC front end device has not received the COT from the mobile switching center server.

In step 105, subsequent to sending the ACM to the mobile switching center server, it further comprises: via a CONTINUE of the type of 200. the BICC front end device judging whether to send an answer message (ANM) to the mobile switching center server; after the BICC front end device sends the ANM, when a release message (REL) is received from the mobile switching center server, the BICC front end device sending an event report message EVENTREPORTRES to the service platform, and the service platform sending an ending message BYE to the media server, and then the BICC front end device sending a release completion message (RLC) to the mobile switching center server.

Herein it should be noted that the BICC front end device transmits the information of the establishment of a multimedia bearer via the application transport parameters in the IAM or APM, wherein a tunnel indication parameter, an action indication parameter and a bearer control parameter in the IAM or APM all belong to application transport parameters and collectively indicate the manners of the establishment of the bearer. In a situation based on the IP bearer, there are three manners for establishing the bearer: a tunnel forward fast bearer establishment, a tunnel forward delayed bearer establishment and a tunnel backward delayed bearer establishment.

Method embodiment 1: in a situation based on the IP bearer, the manner of establishing the bearer is the tunnel forward delayed bearer establishment, then the method for implementing the IP-enabled color ring comprises the following steps:
Step 201, the mobile switching center server sends a BICC signaling, i.e., IAM, to the BICC front end device wherein the type of the BICC front end device may be MSG9000.
Step 202, the BICC front end device analyzes the called number and the signaling content in the IAM, judges the type of the service, and returns the APM to the mobile switching center server to request SDP information if the type of the service is a color ring service and the manner of establishing the bearer is the tunnel forward delayed bearer establishment.
Step 203, after the mobile switching center server has sent the APM carrying complete SDP information, the BICC front end device converts relevant information including the calling and called numbers and the SDP information into an internal message, i.e., ADDRESSEVENTNOTIFY, and sends it to the service platform.

Herein, if the manner of establishing the bearer is the tunnel forward fast bearer establishment, when the BICC front end device receives the IAM, analyzing the number of the called number can obtain a specific service key and the type of the service corresponding to the number, and the BICC front end device carries this service key to the service platform when sending the ADDRESSEVENTNOTIFY to the service platform, and the service platform triggers according to the service key a corresponding service flow, such as a color ring service and a color ring management service and so on.

Step 204, the service platform triggers the color ring service which inquires about a user database to obtain enough information, and afterwards, a corresponding SIP signaling, i.e., the INVITE, is constituted to control the media server.

Step 205, the media server returns a corresponding SIP signaling, i.e., the CONTINUE, which carries the SDP information of a media server side.

Step 206, the service platform sends the SDP information of the media server side to the BICC front end device by the CONTINUE of the type of 180 and carrying the SDP information of the media server side.

Step 207, the BICC front end device fills the obtained SDP information of the media server side into the bearer control parameters of the APM, and sends the APM to the mobile switching center server to notify an opposing party of the SDP information of the media server side.

Step 208, the BICC front end device returns a CONTINUEACK to the service platform and completes a media negotiation.

Herein if the action indication parameter of the IAM is a continuous feature indication parameter and the continuous feature indication parameter indicates that the COT is expected, the BICC front end device waits for the COT sent from the mobile switching center server, and step 209 is executed, otherwise, it means that the continuous feature indication parameter in the IAM indicates that the COT is not expected, and then step 211 will be executed.

Step 209, the BICC front end device receives the COT sent from the mobile switching center server and informs the service platform via the INFO that the bearer has been established and the color ring can be displayed.

Step 210, the BICC front end device returns the ACM to the mobile switching center server after receiving the INFORESULT from the service platform.

Step 211, at this time, by providing a configurable timer which ensures that the bearer can be established before the timer expires, the BICC front end device sends the ACM to the mobile switching center server after the timer has expired.

Step 212, via the CONTINUE of the type of 200, the BICC front end device judges whether to return an ANM, which step is used for managing the flow and not available in a normal color ring flow.

Step 213, a user hears a sound and can interact with a service via the media server, and when the user answers or gives up a call, the mobile switching center server sends an REL to the BICC front end device, and the BICC front end device sends a BYE via the service platform to end the call.

When the manner of establishing the bearer is the tunnel forward fast bearer establishment, the method for implementing the IP-enabled color ring comprises steps similar to those of the method embodiment 1, only except that the initial step of the flow of implementing the IP-enabled color ring using the tunnel forward fast bearer establishment is: the mobile switching center server sends the BICC signaling, i.e., IAM, to the BICC front end device, and the bearer control parameters of the IAM sent carry the SDP information, and after receiving the IAM with the SDP information, the BICC front end device directly organizes the ADDRESSEVENTNOTIFY to the service platform. While the initial step of the flow of implementing the IP-enabled color ring in the method embodiment 1 is: the bearer control parameters of the IAM sent do not carry the SDP information, and it is necessary for the BICC front end device in the subsequent steps to return the APM to request the SDP information and wait for the APM with the SDP information sent from the mobile switching center server, to obtain the SDP information.

Described above are just preferable embodiments of the present invention and not intend to limit the scope of protection of the present embodiment.

### Industrial Applicability

In some embodiments, the BICC signaling is used to access the R4 network and then communicate with the R4 network; the SIP signaling is used to communicate with the R5/R6 network; and the conversion between the BICC signaling and the SIP signaling is realized within the service platform.

With the present embodiment, it is solved the problem that color ring services are realized using the R5/R6 network equipments in the R4 network architecture, that is, interconnection can be realized between the media server based on the R5/R6 network and the core network of the R4 network and thus to merge the R4 network with the R5/R6 network so as to realize the IP-enabled color ring. The network equipments with the BICC interface or the SIP interface are connected with each other directly in use by adopting the present embodiment.

## Claims

1. A system for realizing Internet Protocol, IP-enabled color ring, comprising: a bearer independent call control, BICC, front end device (1), a service platform (2), and a media server (3), wherein the BICC front end device is configured to receive and parse a BICC signaling from a mobile switching center server (4), and to encapsulate the same in an internal message mode and to send it to the service platform; the service platform is configured to parse an internal message acquired from the BICC front end device, to encapsulate the same into a Session Initiation Protocol, SIP, signaling and to send it to the media server; and to receive and parse a response of the SIP signaling acquired from the media server, to encapsulate the same in the internal message mode and to send it to the BICC front end device; and the media server is configured to receive the SIP signaling and to return the response of the SIP signaling to the service platform wherein the BICC signaling is an initial address message, IAM, and the BICC front end device is configured to receive and parse the IAM from a mobile switching center server, if bearer control parameters of the parsed IAM contain session description protocol, SDP, information of a media gateway (5), to directly encapsulate the data parsed from the IAM, and to convert the IAM into an initial address notification message, ADDRESSEVENTNOTIFY, and to send it to the service platform, otherwise, the BICC front end device is configured to return an application pass message, APM, to the mobile switching center server and to request SDP information, when the mobile switching center server responds to the APM and returns an APM encapsulated with the SDP information, the BICC front end device is configured to encapsulate the data parsed from the IAM, to convert the IAM into the ADDRESSEVENTNOTIFY and to send it to the service platform.

2. The system according to claim 1 , the internal message mode is that the specific data obtained by parsing the SIP signaling or the BICC signaling based on corresponding protocols is encapsulated into a message.

3. A method for implementing Internet Protocol, IP-enabled color ring, comprising:
A. a bearer independent call control, BICC, signaling access equipment (1) receiving and parsing a BICC signaling, encapsulating the same in an internal message mode and sending it to a service platform (2) thereafter;
B. the service platform parsing an internal message acquired from the BICC signaling access equipment, encapsulating the same into a session initiation protocol, SIP, signaling and then sending it to an SIP signaling access and media service equipment (3); and
C. the service platform receiving and parsing a response of the SIP signaling acquired from the SIP signaling access and media service equipment, encapsulating the same in an internal message mode and then sending it to the BICC signaling access equipment,
wherein the BICC signaling access equipment is a BICC front end device and the SIP signalling access and media service equipment is a media server, the BICC signaling is an initial address message, IAM, and step A comprises:
A1. the BICC front end device receiving and parsing the IAM from a mobile switching center server (4), if bearer control parameters of the IAM parsed contain session description protocol, SDP, information of a media gateway (5), directly encapsulating the data parsed from the IAM, and converting the IAM into an initial address notification message, ADDRESSEVENTNOTIFY, and sending it to the service platform, otherwise, executing step A2;
A2. the BICC front end device returning an application pass message, APM, to the mobile switching center server and requesting SDP information, when the mobile switching center server responds to the APM and returns an APM encapsulated with the SDP information, the BICC front end device encapsulating the data parsed from the IAM, converting the IAM into the ADDRESSEVENTNOTIFY and sending it to the service platform.

4. The method according to claim 3, wherein step B comprises: the service platform parsing the ADDRESSEVENTNOTIFY acquired from the BICC front end device, encapsulating it into an invitation message, INVITE, and sending it to the media server; and step C comprises: the service platform receiving and parsing a continuation message, CONTINUE, acquired from the media server and encapsulated with the SDP information of the media server side, encapsulating the data parsed from the CONTINUE, converting the CONTINUE into a CONTINUE of a type of 180 and carrying the SDP information of the media server side, and sending it to the BICC front end device.

5. The method according to claim 4, subsequent to step C, further comprising:
D. the BICC front end device parsing the CONTINUE of the type of 180 and carrying the SDP information of the media server side, filling the SDP information of the media server side parsed in the bearer control parameters of the APM, and sending the APM to the mobile switching center server; then the BICC front end device returning a continuation response message CONTINUEACK to the service platform.

6. The method according to claim 5, subsequent to step D, further comprising:
E. when the BICC front end device receives a continuity message, COT, from the mobile switching center server, parsing the COT, encapsulating the data parsed from the COT, and converting the COT into an information message, INFO, and sending it to the service platform; the BICC front end device sending an address complete message, ACM, to the mobile switching center server after receiving an information response message, INFORESULT, from the service platform; and when the BICC front end device has not received the COT from the mobile switching center server, sending an ACM to the mobile switching center server after a timer preset by the BICC front end device has expired.

7. The method according to claim 6, subsequent to sending the ACM to the mobile switching center server, further comprising:
X. via a CONTINUE of the type of 200, the BICC front end device judging whether to send an answer message, ANM, to the mobile switching center server; after the BICC front end device sends the ANM, when a release message, REL, is received from the mobile switching center server, the BICC front end device sending an event report message, EVENTREPORTRES, to the service platform, and the service platform sending an ending ssage, BYE, to the media server, and then the BICC front end device sending a release completion message, RLC, to the mobile switching center server.

## Patentansprüche

1. System zur Realisierung eines Internetprotokoll, IP-fähigen Color-Rings, umfassend: eine Front-End-Vorrichtung für trägerunabhängige Rufsteuerung, BICC, (1), eine Dienstplattform (2), und einen Medienserver (3), wobei
die BICC-Front-End-Vorrichtung konfiguriert ist, eine BICC-Signalisierung von einem mobilen Vermittlungsstellenserver (4) zu empfangen und zu parsen, und diese in einen internen Nachrichtenmodus einzukapseln und an die Dienstplattform zu senden;
die Dienstplattform konfiguriert ist, eine interne Nachricht, welche von der BICC-Front-End-Vorrichtung erworben wurde, zu parsen, diese in eine Sitzungseinleitungsprotokoll, SIP-Signalisierung einzukapseln, und an den Medienserver zu senden; und eine Antwort von der SIP-Signalisierung, welche von dem Medienserver erworben wurde, zu empfangen und zu parsen, diese in den internen Nachrichtenmodus einzukapseln und an die BICC-Front-End-Vorrichtung zu senden; und
der Medienserver konfiguriert ist, die SIP-Signalisierung zu empfangen und die Antwort der SIP-Signalisierung an die Dienstplattform zu retournieren, wobei die BICC-Signalisierung eine Anfangsadressnachricht, IAM, ist, und die BICC-Front-End-Vorrichtung konfiguriert ist, die IAM von einem mobilen Vermittlungsstellenserver zu empfangen und parsen, wenn Trägersteuerungsparameter der geparsten IAM Informationen zum Session Description Protocol, SDP, eines Medien-Gateways (5), enthalten, um die von der IAM geparsten Daten direkt einzukapseln, und um die IAM in eine Anfangsadressbenachrichtigungsnachricht, ADDRESSEVENTNOTIFY, umzuwandeln, und um sie an die Dienstplattform zu senden, anderenfalls die BICC-Front-End-Vorrichtung konfiguriert ist, eine Anwendungsdurchgangsnachricht, APM, an den mobilen Vermittlungsstellenserver zu retournieren und SDP-Informationen anzufordern, wenn der mobile Vermittlungsstellenserver auf die APM antwortet und eine in den SDP-Informationen eingekapselte APM retourniert, die BICC-Front-End-Vorrichtung konfiguriert ist, die von der IAM geparsten Daten einzukapseln, die IAM in die ADDRESSEVENTNOTIFY umzuwandeln und an die Dienstplattform zu senden.

2. System nach Anspruch 1, wobei der interne Nachrichtenmodus dergestalt ist, dass die spezifischen Daten, welche mittels Parsen der SIP-Signalisierung oder der BICC-Signalisierung auf Basis von entsprechenden Protokollen erhalten wurden, in eine Nachricht eingekapselt werden.

3. Verfahren zur Implementierung eines Internetprotokoll, IP-fähigen Color-Rings, umfassend:
A. Empfangen und Parsen einer BICC-Signalisierung, Einkapseln derselben in einen internen Nachrichtenmodus und anschließendes Senden an eine Dienstplattform (2) durch eine Signalisierungszugriffsausrüstung für trägerunabhängige Rufsteuerung, BICC (1);
B. Parsen einer internen Nachricht, welche von der BICC-Signalisierungszugriffsausrüstung erworben wurde, Einkapseln derselben in ein Sitzungseinleitungsprotokoll, SIP, und anschließendes Senden an eine SIP-Signalisierungszugriffs- und Mediendienstausrüstung (3) durch die Dienstplattform; und
C. Empfangen und Parsen einer Antwort von der SIP-Signalisierung, welche von der SIP-Signalisierungszugriffs- und Mediendienstausrüstung erworben wurde, Einkapseln derselben in einen internen Nachrichtenmodus und anschließendes Senden an die BICC-Signalisierungszugriffsausrüstung durch die Dienstplattform,
wobei die BICC-Signalisierungszugriffsausrüstung eine BICC-Front-End-Vorrichtung ist und die SIP-Signalisierungszugriffs- und Mediendienstausrüstung ein Medienserver ist, die BICC-Signalisierung eine Anfangsadressnachricht, IAM, ist, und Schritt A umfasst:
A1. Empfangen und Parsen der IAM von einem mobilen Vermittlungsstellenserver (4), wenn Trägersteuerungsparameter der geparsten IAM Informationen zum Session Description Protocol, SDP, eines Medien-Gateways (5), enthalten, direktes Einkapseln der von der IAM geparsten Daten, und Umwandeln der IAM in eine Anfangsadressbenachrichtigungsnachricht, ADDRESSEVENTNOTIFY, und Senden an die Dienstplattform durch die BICC-Front-End-Vorrichtung, anderenfalls Ausführen von Schritt A2;
A2. Retournieren einer Anwendungsdurchgangsnachricht, APM, an den mobilen Vermittlungsstellenserver und Anfordern von SDP-Informationen durch die BICC-Front-End-Vorrichtung, wenn der mobile Vermittlungsstellenserver auf die APM antwortet und eine APM retourniert, welche in den SDP-Informationen eingekapselt ist, Einkapseln der von der IAM geparsten Daten, Umwandeln der IAM in die ADDRESSEVENTNOTIFY und Senden an die Dienstplattform durch die BICC-Front-End-Vorrichtung.

4. Verfahren nach Anspruch 3, wobei
Schritt B umfasst: Parsen der ADDRESSEVENTNOTIFY, welche von der BICC-Front-End-Vorrichtung erworben wurde, Einkapseln in eine Einladungsnachricht, INVITE, und Senden an den Medienserver durch die Dienstplattform; und
Schritt C umfasst: Empfangen und Parsen einer Fortsetzungsnachricht, CONTINUE, welche von dem Medienserver erworben und in den SDP-Informationen der Medienserverseite eingekapselt wurde, Einkapseln der von der CONTINUE geparsten Daten, Umwandeln der CONTINUE in eine CONTINUE vom Typ 180 und die die SDP-Informationen von der Medienserverseite trägt, und Senden an die BICC-Front-End-Vorrichtung durch die Dienstplattform.

5. Verfahren nach Anspruch 4, anschließend an Schritt C, weiter umfassend:
D. Parsen der CONTINUE vom Typ 180 und die die SDP-Informationen von der Medienserverseite trägt, Ausfüllen der SDP-Informationen von der geparsten Medienserverseite, in den Trägersteuerungsparametern der APM, und Senden der APM an den mobilen Vermittlungsstellenserver durch die BICC-Front-End-Vorrichtung; anschließend Senden einer Fortsetzungsantwortnachricht CONTINUEACK durch die BICC-Front-End-Vorrichtung an die Dienstplattform.

6. Verfahren nach Anspruch 5, anschließend an Schritt D, weiter umfassend:
E. wenn die BICC-Front-End-Vorrichtung eine Fortsetzungsnachricht, COT, von dem mobilen Vermittlungsstellenserver empfängt, Parsen der COT, Einkapseln der von der COT geparsten Daten und Umwandeln der COT in eine Informationsnachricht, INFO, und Senden an die Dienstplattform; Senden einer Adressvollständigkeitsnachricht, ACM, durch die BICC-Front-End-Vorrichtung an den mobilen Vermittlungsstellenserver, nachdem eine Informationsantwortnachricht, INFORESULT, von der Dienstplattform erhalten wurde; und
wenn die BICC-Front-End-Vorrichtung die COT nicht von dem mobilen Vermittlungsstellenserver erhalten hat, Senden einer ACM an den mobilen Vermittlungsstellenserver, nachdem ein Timer, welcher von der BICC-Front-End-Vorrichtung voreingestellt wurde, abgelaufen ist.

7. Verfahren nach Anspruch 6, anschließend an das Senden der ACM an den mobilen Vermittlungsstellenserver, weiter umfassend:
X. Bewerten, über eine CONTINUE vom Typ 200, durch die BICC-Front-End-Vorrichtung, ob eine Antwortnachricht, ANM an den mobilen Vermittlungsstellenserver gesendet werden soll;
nachdem die BICC-Front-End-Vorrichtung die ANM sendet, wenn eine Freigabenachricht, REL, von dem mobilen Vermittlungsstellenserver empfangen wurde, Senden einer Ereignisberichtnachricht, EVENTREPORTRES, durch die BICC-Front-End-Vorrichtung an die Dienstplattform, und Senden einer Endnachricht, BYE, durch die Dienstplattform an den Medienserver, und dann Senden einer Freigabeabschlussnachricht, RLC, durch die BICC-Front-End-Vorrichtung an den mobilen Vermittlungsstellenserver.

## Revendications

1. Système de réalisation d'une sonnerie personnalisée par protocole Internet, IP, comprenant :
un dispositif frontal de commande d'appel indépendante du support, BICC, (1), une plate-forme de service (2) et un serveur de média (3), dans lequel
le dispositif frontal BICC est configuré pour recevoir et analyser syntaxiquement une signalisation BICC provenant d'un serveur de centre de commutation mobile (4), et pour encapsuler celle-ci dans un mode de message interne et l'envoyer à la plate-forme de service ;
la plate-forme de service est configurée pour analyser syntaxiquement un message interne acquis à partir du dispositif frontal BICC, pour encapsuler celui-ci dans une signalisation de protocole d'ouverture de session, SIP, et l'envoyer au serveur de média ; et pour recevoir et analyser syntaxiquement une réponse de la signalisation SIP acquise à partir du serveur de média, pour encapsuler celle-ci dans le mode de message interne et l'envoyer au dispositif frontal BICC ; et
le serveur de média est configuré pour recevoir la signalisation SIP et renvoyer la réponse de la signalisation SIP à la plate-forme de service, dans lequel la signalisation BICC est un message d'adresse initiale, IAM, et le dispositif frontal BICC est configuré pour recevoir et analyser syntaxiquement l'IAM provenant d'un serveur de centre de commutation mobile, si des paramètres de commande de support de l'IAM analysé syntaxiquement contiennent des informations de protocole de description de session, SDP, d'une passerelle média (5), pour encapsuler directement les données analysées syntaxiquement à partir de l'IAM et pour convertir l'IAM en un message de notification d'adresse initiale, ADDRESSEVENTNOTIFY, et l'envoyer à la plate-forme de service, sinon, le dispositif frontal BICC est configuré pour renvoyer un message de passage d'application, APM, au serveur de centre de commutation mobile et pour demander des informations SDP, quand le serveur de centre de commutation mobile répond à l'APM et renvoie un APM encapsulé avec les informations SDP, le dispositif frontal BICC est configuré pour encapsuler les données analysées syntaxiquement à partir de l'IAM, pour convertir l'IAM dans l'ADDRESSEVENTNOTIFY et l'envoyer à la plate-forme de service.

2. Système selon la revendication 1, le mode de message interne est que les données spécifiques obtenues par l'analyse syntaxique de la signalisation SIP ou de la signalisation BICC sur la base de protocoles correspondants sont encapsulées dans un message.

3. Procédé de mise en oeuvre d'une sonnerie personnalisée par protocole Internet, IP, comprenant :
A. la réception et l'analyse syntaxique d'une signalisation BICC, l'encapsulation de celle-ci dans un mode de message interne et ensuite son envoi à une plate-forme de service (2), par un équipement d'accès de signalisation de commande d'appel indépendante du support, BICC, (1) ;
B. l'analyse syntaxique d'un message interne acquis à partir de l'équipement d'accès de signalisation BICC, l'encapsulation de celui-ci dans une signalisation de protocole d'ouverture de session, SIP, et ensuite son envoi à un équipement de service média et d'accès de signalisation SIP (3), par la plate-forme de service ; et
C. la réception et l'analyse syntaxique d'une réponse de la signalisation SIP acquise à partir de l'équipement de service média et d'accès de signalisation SIP, l'encapsulation de celle-ci dans un message interne et ensuite son envoi à l'équipement d'accès de signalisation BICC, par la plate-forme de service,
dans lequel l'équipement d'accès de signalisation BICC est un dispositif frontal BICC et l'équipement de service média et d'accès de signalisation SIP est un serveur de média, la signalisation BICC est un message d'adresse initiale, IAM, et l'étape A comprend :
A1. la réception et l'analyse syntaxique de l'IAM provenant d'un serveur de centre de commutation mobile (4), si des paramètres de commande de support de l'IAM analysé syntaxiquement contiennent des informations de protocole de description de session, SDP, d'une passerelle média (5), l'encapsulation directe des données analysées syntaxiquement à partir de l'IAM et la conversion de l'IAM en un message de notification d'adresse initiale, ADDRESSEVENTNOTIFY, et son envoi à la plate-forme de service, sinon, l'exécution d'une étape A2, par le dispositif frontal BICC ;
A2. le renvoi d'un message de passage d'application, APM, au serveur de centre de commutation mobile et la demande d'informations SDP par le dispositif frontal BICC, quand le serveur de centre de commutation mobile répond à l'APM et renvoie un APM encapsulé avec les informations SDP, l'encapsulation des données analysées syntaxiquement à partir de l'IAM, la conversion de l'IAM dans l'ADDRESSEVENTNOTIFY et son envoi à la plate-forme de service, par le dispositif frontal BICC.

4. Procédé selon la revendication 3, dans lequel
l'étape B comprend : l'analyse syntaxique de l'ADDRESSEVENTNOTIFY acquis à partir du dispositif frontal BICC, son encapsulation dans un message d'invitation, INVITE, et son envoi au serveur de média, par la plate-forme de service ; et
l'étape C comprend : la réception et l'analyse syntaxique d'un message de continuation, CONTINUE, acquis à partir du serveur de média et encapsulé avec les informations SDP du côté serveur de média, l'encapsulation des données analysées syntaxiquement à partir du CONTINUE, la conversion du CONTINUE en un CONTINUE d'un type de 180 et transportant les informations SDP du côté serveur de média, et son envoi au dispositif frontal BICC, par la plate-forme de service.

5. Procédé selon la revendication 4, subséquemment à l'étape C, comprenant en outre :
D. l'analyse syntaxique du CONTINUE du type de 180 et transportant les informations SDP du côté serveur de média, le remplissage des informations SDP du côté serveur de média analysées synthétiquement dans les paramètres de commande de support de l'APM, et l'envoi de l'APM au serveur de centre de commutation mobile, par le dispositif frontal BICC ; ensuite le renvoi par le dispositif frontal BICC d'un message de réponse de continuation CONTINUEACK à la plate-forme de service.

6. Procédé selon la revendication 5, subséquemment à l'étape D, comprenant en outre :
E. quand le dispositif frontal BICC reçoit un message de continuité, COT, à partir du serveur de centre de commutation mobile, l'analyse syntaxique du COT, l'encapsulation des données analysées syntaxiquement à partir du COT, et la conversion du COT dans un message d'informations INFO, et son envoi à la plate-forme de service ; l'envoi par le dispositif frontal BICC d'un message complet d'adresse, ACM, au serveur de centre de commutation mobile après la réception d'un message de réponse d'informations, INFORESULT, à partir de la plate-forme de service ; et
quand le dispositif frontal BICC n'a pas reçu le COT à partir du serveur de centre de commutation mobile, l'envoi d'un ACM au serveur de centre de commutation mobile après qu'un temporisateur préréglé par le dispositif frontal BICC a expiré.

7. Procédé selon la revendication 6, subséquemment à l'envoi de l'ACM au serveur de centre de commutation mobile, comprenant en outre :
X. par le biais d'un CONTINUE du type de 200, le fait de juger par le dispositif frontal BICC si envoyer un message de réponse, ANM, au serveur de centre de commutation mobile ;
après que le dispositif frontal BICC envoie l'ANM, quand un message de libération, REL, est reçu à partir du serveur de centre de commutation mobile, l'envoi par le dispositif frontal BICC d'un message de rapport d'événement, EVENTREPORTRES, à la plate-forme de service et l'envoi par la plate-forme de service d'un message de conclusion, BYE, au serveur de média, et ensuite l'envoi par le dispositif frontal BICC d'un message d'achèvement de libération, RLC, au serveur de centre de commutation mobile.
